# FASCICULE DE BREVET EUROPEEN

(11) **EP 1 420 373 B1**
(45) Date de publication et mention de la délivrance du brevet: **06.07.2005**
(21) Numéro de dépôt: 03292709.7
(22) Date de dépôt: 30.10.2003
(51) Int. Cl.: G07F 7/02, H03M 13/09

(54) **Contrôle de code de carte pré-payée virtuelle**
Codekontrolle für virtuell vorausbezahlte Karte
Code control for virtual prepaid card

(30) Priorité: 18.11.2002 FR 0214481
(43) Date de publication de la demande: 19.05.2004
(73) Titulaire: FRANCE TELECOM, 75015 Paris (FR)
(72) Inventeur: Frisch, Laurent, 75013 Paris (FR); Macario-Rat, Gilles, 92170 Vanves (FR); Mouton, Dimitri, 75015 Paris (FR)
(74) Mandataire: Cabinet Martinet & Lapoux

(56) Documents cités:
- EP-A- 0 108 655
- EP-A- 0 814 441
- FR-A- 2 514 593
- US-A1- 2002 178 419

## Description

La présente invention concerne le contrôle d'un code saisi lors de l'utilisation d'une carte pré-payée virtuelle.

Les cartes pré-payées virtuelles sont des cartes gérées par un serveur de service centralisé. Une carte pré-payée permet à son porteur de recevoir un service de la part d'un fournisseur de service, ce service étant payé par avance lors de l'achat de la carte.

Le porteur-utilisateur de la carte se connecte au serveur par n'importe quel terminal, comme un téléphone fixe ou mobile, un ordinateur personnel à travers le réseau internet, un terminal vidéotex, etc. L'utilisateur est authentifié par un code d'identification de la carte transmis par le terminal afin que le serveur géré par le fournisseur de service débite un compte correspondant de la carte. En général, le code d'identification de la carte est un numéro à une dizaine de chiffres. Toutes les caractéristiques de la carte, en particulier son crédit, sont gérées par le serveur de service centralisé.

A la différence des cartes pré-payées non virtuelles qui comprennent nécessairement un moyen électronique constitué par un circuit intégré avec un microcontrôleur et enregistrant toutes les caractéristiques de la carte, y compris par exemple un crédit restant, les cartes pré-payées virtuelles auxquelles se réfère l'invention peuvent être de deux sortes :
- les cartes pré-payées virtuelles immatérielles, qui sont constituées d'un code d'identification, tel qu'un simple numéro, qui est par exemple lisible sur la carte après grattage ;
- les cartes pré-payées virtuelles matérielles, qui sont constituées d'un dispositif physique, par exemple une mémoire, dans lequel le code d'identification a été pré-enregistré et qui généralement génère un code à chaque session d'utilisation de la carte.

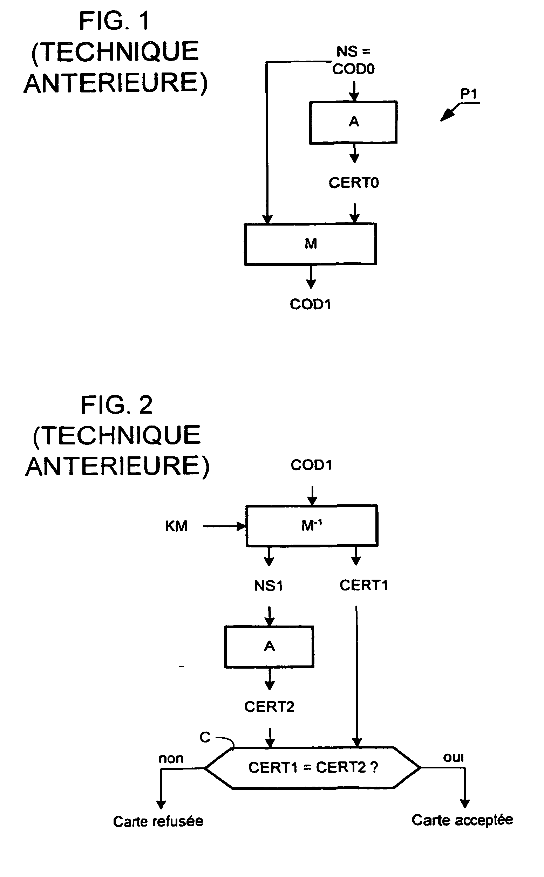

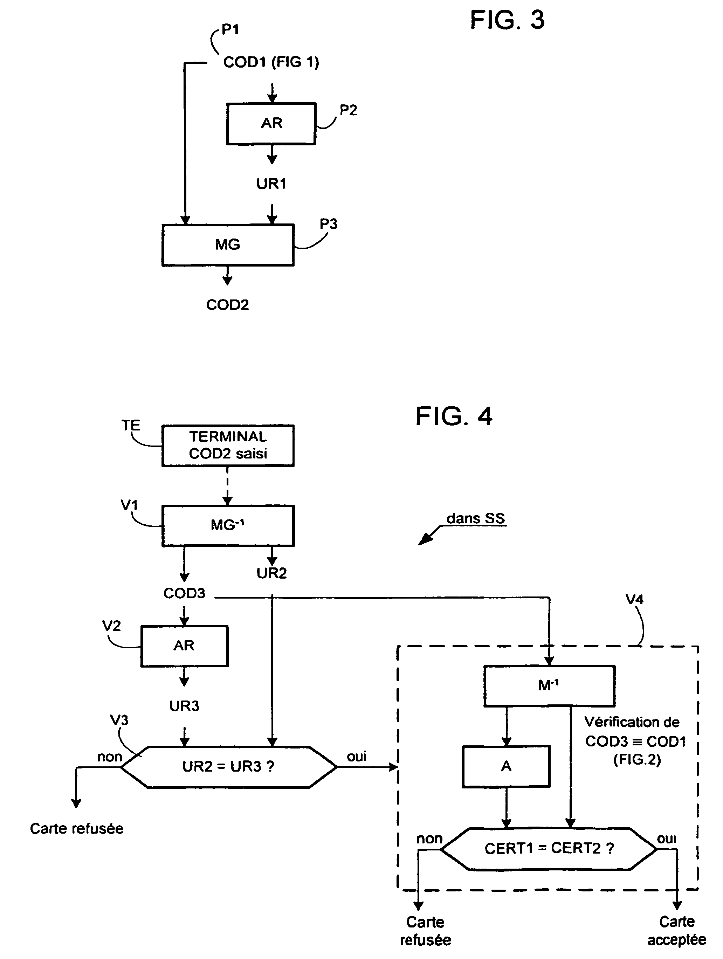

En réference aux demandes de brevet européen EP0814440 et EP0814441, le code d'une carte pré-payée virtuelle est préconçu avant la mise en service de la carte généralement selon le procédé montré à la figure 1 mis en oeuvre chez le fabricant de la carte. Un numéro de série NS fourni par le fournisseur de service au fabricant de la carte est choisi parmi un ensemble de numéros de série possibles. Un algorithme A qui peut être symétrique à clé secrète KA, reçoit en tant que données le numéro de série NS et fournit un certificat CERT0. Puis le numéro de série NS et le certificat CERT0 sont appliqués en tant que données à un algorithme de mélange M de préférence symétrique (ou asymétrique) à clé secrète KM pour fournir un code d'identification COD1 de la carte pré-payée virtuelle.

Le code d'identification COD1 est ainsi produit dans un environnement sécurisé chez le fabricant de cartes de manière à garantir le secret des algorithmes A et M et des clés internes utilisées KA et KM. Aucune redondance de code n'est prévue au cours de cette production de code pour vérifier ultérieurement le code saisi par l'utilisateur.

Pour obtenir un service de la part du fournisseur de service, l'utilisateur doit d'abord prouvé qu'il est en possession de la carte pré-payée. A cet effet, l'utilisateur transmet à travers l'un des terminaux précités le code de la carte pré-payée au serveur centralisé du fournisseur de service qui authentifie la carte en effectuant une opération de "vérification de validité".

La validité d'une carte pré-payée est vérifiée dans le serveur selon le procédé montré à la figure 2. Le code saisi COD1 est appliqué en tant que données à un algorithme M⁻¹ qui peut être symétrique ou asymétrique avec clé secrète KM, en tant que algorithme de "démélange" inverse de l'algorithme M. L'algorithme M⁻¹ fournit deux paramètres NS1 et CERT1. Ces deux paramètres sont potentiellement un numéro de série et un certificat codé tels que ceux déterminés dans la phase de production du code COD1 de la carte. Après séparation des paramètres NS1 et CERT1, le numéro NS1 est appliqué en tant que données à l'algorithme A qui produit un deuxième certificat codé CERT2 de manière analogue à la phase de production de code. Finalement, une comparaison C compare les certificats CERT1 et CERT2 et produit un signal logique "Oui" ou "Non" selon que les deux certificats sont égaux ou différents. Si les deux certificats CERT1 et CERT2 sont égaux, la carte est alors réputée valide et acceptée pour accéder à un service, par exemple après composition d'un mot de passe par l'utilisateur. Cette vérification de validité est effectuée dans un environnement sécurisé de manière à garantir le secret des algorithmes A et M et des clés internes de ceux-ci.

A cause de l'environnement sécurisé nécessaire à l'exécution de la fonction de vérification, l'opération de vérification est coûteuse. La sécurisation évite que les algorithmes A et M ne soient divulgués, ce qui permettrait de produire de vrais codes de carte valides et ainsi de frauder.

Or la vérification de validité est la seule opération qui vérifie la saisie du code de la carte. Quand bien même il y aurait une erreur de saisie ou une fraude, la vérification de validité coûteuse est encore effectuée.

L'objectif principal de l'invention est d'empêcher la vérification coûteuse de validité du code saisi d'une carte pré-payée virtuelle dans la majorité des cas où cette vérification rapide et efficace ne s'avère pas nécessaire à la suite notamment d'une erreur de saisie du code par l'utilisateur. Plus généralement, la vérification de code est empêchée lorsqu'un facteur de bruit, y compris d'origine humaine, perturbe le code depuis la saisie de celui-ci via la transmission de celui-ci jusqu'à la réception de celui-ci dans un moyen de traitement de code de carte, tel qu'un serveur, un terminal ou une borne de service. L'invention vise ainsi à détecter et signaler une erreur de saisie du code avant une vérification telle que celle montrée à la figure 2, sans corriger les erreurs de saisie de code.

Pour atteindre cet objectif, un procédé pour contrôler un premier code d'identification pour carte pré-payée, est caractérisé en ce qu'il comprend les étapes suivantes :
- lors de la fabrication de la carte, application au moins d'une partie du premier code à un algorithme de redondance pour produire une première unité de redondance, et application du premier code et de la première unité de redondance à un algorithme de mélange produisant un deuxième code, et
- lors de l'utilisation de la carte, après saisie du deuxième code, application du deuxième code à un algorithme inverse de l'algorithme de mélange pour produire un troisième code et une deuxième unité de redondance, application du troisième code à l'algorithme de redondance pour produire une troisième unité de redondance, comparaison des deuxième et troisième unités de redondance, et vérification du troisième code seulement lorsque les deuxième et troisième unités de redondance sont égales.

Ainsi, le troisième code susceptible d'être identique au premier code d'identification de la carte selon la technique antérieure, c'est-à-dire à ladite partie du premier code, n'est pas vérifié selon l'invention lorsque les deuxième et troisième unités de redondance sont différentes, c'est-à-dire dans la majorité des tentatives de fraude et essais systématiques ou aléatoires de codes. Le contrôle de code est alors écourté.

Par exemple, l'algorithme de redondance est un codage linéaire en blocs de symboles et l'unité de redondance comprend un nombre de symboles inférieur à celui de ladite partie de premier code ; typiquement, l'unité de redondance peut comprendre un ou au plus deux symboles alphanumériques afin de limiter la longueur du deuxième code à saisir lorsque par exemple celui-ci contient l'unité de redondance.

Initialement lors de la fabrication de la carte, selon une première réalisation de l'invention, le procédé comprend en outre, une application d'un numéro de série de la carte à un algorithme prédéterminé pour produire un certificat codé et une application du numéro de série et du certificat codé en tant que données à un deuxième algorithme de mélange qui produit le premier code. La vérification du troisième code consiste alors en une application du troisième code à un algorithme inverse dudit deuxième algorithme de mélange pour produire un premier numéro de série et un premier certificat codé, une application dudit premier numéro de série à l'algorithme prédéterminé qui produit un deuxième certificat codé, et une comparaison des premier et deuxième certificats codés afin de valider la carte lorsque les deux certificats comparés sont égaux.

Selon une deuxième réalisation de l'invention, le procédé comprend initialement lors de la fabrication de la carte, une application d'un numéro de série initial de la carte à un algorithme prédéterminé pour produire un certificat codé initial, ladite partie du premier code appliquée à l'algorithme de redondance étant constituée par le numéro de série initial et/ou le certificat codé initial, et le premier code étant constitué par la concaténation du numéro de série initial et du certificat codé initial. La vérification du troisième code comprend alors une segmentation de celui-ci en un premier certificat codé et un premier numéro de série, une application du premier numéro de série à l'algorithme prédéterminé pour produire un deuxième certificat codé, et une comparaison des premier et deuxième certificats codés afin de valider la carte lorsque les deux certificats codés comparés sont égaux.

Simplement, l'algorithme de mélange peut être une concaténation du premier code et de la première unité de redondance, et l'algorithme inverse de l'algorithme de mélange peut être une segmentation du deuxième code saisi en le troisième code et la deuxième unité de redondance.

En pratique, lors de l'utilisation de la carte, le deuxième code peut être saisi dans un terminal qui le transmet à un serveur de service dans lequel l'algorithme inverse de l'algorithme de mélange, l'algorithme de redondance, la comparaison et la vérification du troisième code sont exécutés.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un algorithme de production de code de carte pré-payée selon la technique antérieure déjà commentée ;
- la figure 2 est un algorithme de vérification de code selon la technique antérieure déjà commentée ;
- la figure 3 est un algorithme de production de codes de carte pré-payée dépendant d'une unité de redondance selon l'invention ;
- la figure 4 est un algorithme de vérification de codes de carte pré-payée avec vérification d'unité de redondance selon l'invention ;
- la figure 5 est un algorithme de production de codes de carte pré-payée combinant les figures 1 et 3 selon une deuxième réalisation de l'invention ; et
- la figure 6 est un algorithme de vérification de codes de carte pré-payée produit selon la figure 5 et combinant les figures 2 et 4 selon la deuxième réalisation de l'invention.

Selon la première réalisation de l'invention montrée à la figure 1, l'amélioration apportée par l'invention intervient dans un ordinateur programmé à cet effet chez un fabricant de carte, après la production du premier code COD1 lors de la fabrication d'une carte pré-payée virtuelle immatérielle ou matérielle.

Le code COD1 est par exemple fourni par exécution de l'algorithme A et de l'algorithme M selon la figure 1 à partir du numéro de série NS de la carte, constituant un code initial COD0. Selon un autre exemple, le premier code COD1 est choisi aléatoirement au moyen d'un générateur pseudo-aléatoire et stocké dans une base de données pour une éventuelle comparaison chez le fournisseur de service ou chez le fabricant de carte. Selon encore un autre exemple, le code COD1 est généré dynamiquement dans un petit dispositif électronique portable, tel qu'un jeton électronique portable doté d'un transducteur électro-acoustique miniature et constituant un moyen de paiement électronique de service par l'intermédiaire d'un téléphone, de manière à transmettre le code COD1 avec une unité de redondance correspondante selon l'invention, par voie téléphonique vers un serveur de service, pour chaque action sur un bouton de commande du jeton électronique.

En général, le premier code COD1 est constitué d'une dizaine de symboles alphanumériques qui seront codés, lors de l'utilisation de la carte, en code binaire par un terminal du type ordinateur personnel ou téléphone numérique, ou en code à multifréquence DTMF (Dual Time MultiFrequency) dans un téléphone ou jeton électronique avec générateur à multifréquence.

L'invention ajoute deux étapes pour produire un deuxième code COD2 qui constitue maintenant le code de la carte pré-payée virtuelle.

Tout d'abord, après l'étape initiale P1 montrée à la figure 1, le premier code COD1 est appliqué, en tant que données, à un algorithme de redondance prédéterminé AR à une étape P2. L'exécution de l'algorithme de redondance AR produit une première unité de redondance UR1 dont le nombre de symboles alphanumériques codés en code binaire est inférieur à celui du premier code COD1, ou du code initial NS = COD0. L'unité de redondance UR1 comporte typiquement un ou deux symboles.

L'unité de redondance constitue un code de correction d'erreurs qui permet de vérifier l'intégrité de la suite des symboles composant le premier code COD1 lorsque celui-ci a été saisi avec des erreurs. Par exemple, l'algorithme de redondance AR est basé sur un codage linéaire en blocs de symboles du type Reed-Solomon, Luhn ou Hamming. L'algorithme AR impose une corrélation élevée entre le code COD1 et l'unité de redondance UR1 de manière à assurer que toute légère modification dans le code COD1, tel qu'au moins un symbole erroné, voire un ou plusieurs bits erronés dans un ou plusieurs symboles codés dans le code COD1, modifient le résultat UR1 de l'algorithme AR. Comparativement à l'algorithme A selon la technique antérieure montrée à la figure 1, une modification d'un bit dans le code initial NS = COD0 ne modifie pas obligatoirement le résultat CERT de l'algorithme A.

Puis le code COD1 et l'unité de redondance UR1 sont concaténés selon cet ordre pour être appliqués en tant que données à un algorithme de mélange MG à l'étape P3. L'exécution de l'algorithme MG fournit un deuxième code COD2 qui constitue le code de la carte pré-payée virtuelle, à la place du premier code COD1 selon la technique antérieure. Le code COD2 est gravé sur la carte lorsqu'elle est immatérielle, ou est mémorisé dans la carte lorsqu'elle est matérielle.

L'algorithme MG peut être un algorithme symétrique à clé secrète ou un algorithme asymétrique à clé publique et clé privée ; de préférence, la clé publique est appliquée à l'algorithme MG et fournie par le fournisseur de service gérant le serveur vérifiant la validité de la carte. Selon un exemple simple, l'algorithme de mélange MG est constitué simplement par la concaténation du code COD1 et de l'unité de redondance UR1. Selon un autre exemple, l'algorithme de mélange MG est une permutation prédéterminée entre des symboles ou des bits du code COD1 et de l'unité de redondance UR1 concaténés.

Lors de l'utilisation de la carte pré-payée virtuelle, le deuxième code COD2 est lu sur la carte et saisi sur le clavier d'un terminal TE tel qu'un téléphone ou un radiotéléphone, un ordinateur personnel ou un terminal vidéotex si la carte est du type immatériel. Le deuxième code COD2 est saisi par un lecteur de carte dans une mémoire incluse dans la carte sous la commande du terminal doté du lecteur de carte, si la carte est du type matériel. Puis, le code saisi COD2 est transmis depuis le terminal TE vers le serveur de service SS, ou en variante vers un terminal ou une borne publique de service.

Dans le serveur de service SS est ensuite exécutée la vérification du code COD2 comprenant des étapes V1 à V4 montrées à la figure 4. En variante, la fonction de vérification est implémentée dans le terminal lui-même, à la place du serveur de service, lorsque le terminal donne accès lui-même à un service.

A l'étape V1, le code saisi COD2 reçu par le serveur SS est appliqué en tant que données à un algorithme de "démélange" MG⁻¹ inverse de l'algorithme de mélange MG. Cependant l'algorithme MG⁻¹ est l'algorithme MG lui-même lorsque celui-ci est symétrique, ou bien asymétrique. L'algorithme de mélange exécuté produit un troisième code COD3 qui est susceptible d'être identique au premier code COD1 et qui est appliqué à l'algorithme de redondance AR à l'étape V2. Puis à l'étape V3, une deuxième unité de redondance UR2 séparée du code COD3 en sortie de l'algorithme MG⁻¹ est comparée à une troisième unité de redondance UR3 produite par l'algorithme de redondance AR à l'étape V2. Si les unités de redondance comparées UR2 et UR3 sont différentes, alors il est certain que le code COD2 qui a été saisi est erroné et n'est pas un code de carte pré-payée valide. Cette invalidité de code COD2 résulte par exemple d'une erreur de saisie de celui-ci ou d'une tentative de fraude par saisie aléatoire d'un code. Dans ce cas, la carte pré-payée virtuelle est refusée et le serveur SS arrête la vérification de code sans procéder à la vérification du code COD3 en tant que premier code COD1. Le serveur SS signale alors une erreur au terminal TE invitant l'utilisateur de la carte à saisir le code COD2 à nouveau.

En revanche, si les deuxième et troisième unités de redondance UR2 et UR3 sont égales, le serveur SS poursuit la vérification de code à l'étape V4 en appliquant le code COD3, en tant que code COD1, à l'algorithme de "démélange" M⁻¹ selon la figure 2. Une identité des certificats codés comparés CERT1 et CERT2 valide ensuite le code COD3, et par suite le code saisi COD2, et le serveur SS accepte la carte pré-payée virtuelle.

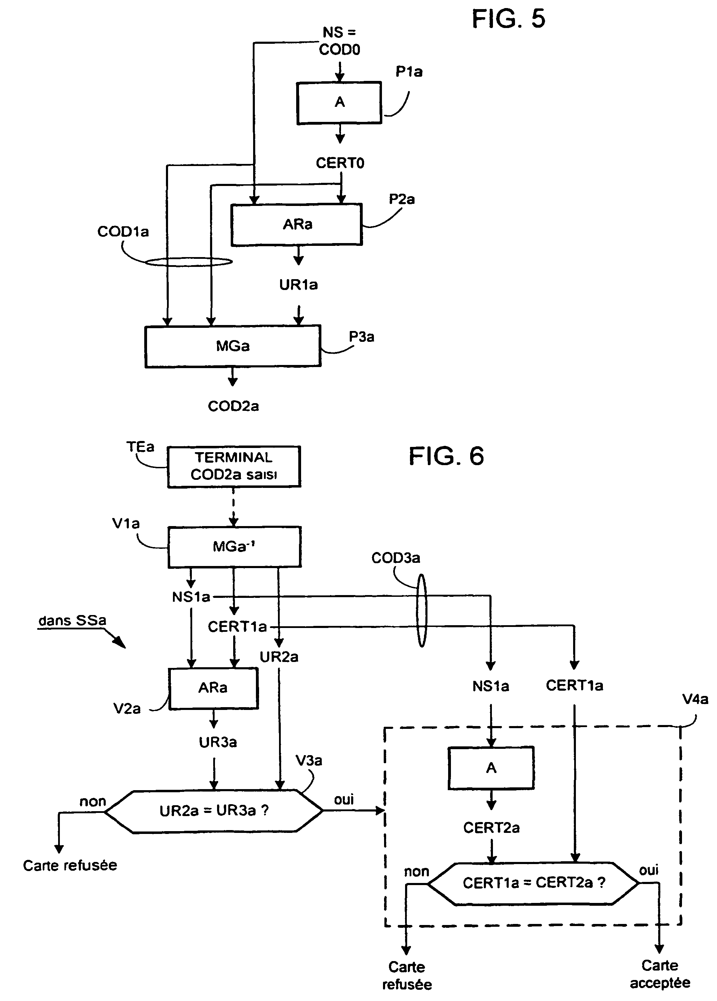

Selon une deuxième réalisation de l'invention montrée aux figures 5 et 6, les figures 1 et 3 sont imbriquées lors de la fabrication de la carte afin que l'algorithme de redondance ARa soit appliqué sur le numéro de série initial NS et/ou sur le certificat codé CERT0 dépendant du numéro de série initial NS, et après la saisie du deuxième code COD2a, la vérification de celui-ci résulte d'une imbriquation des vérifications selon les figures 2 et 4.

Comme montré à la figure 5, le numéro de série initial NS est appliqué à l'algorithme A à une étape P1a de manière à produire le certificat codé CERT0, comme selon la figure 1.

Puis à une étape P2a, le numéro de série initial NS et le certificat codé CERT sont concaténés et appliqués à l'algorithme de redondance ARa afin de produire une unité de redondance UR1a. Lorsque l'algorithme de mélange M dans la figure 1 est réduit à une concaténation, l'unité UR1a est égale à l'unité UR1 selon la figure 3. En variante, seulement le numéro de série initial NS est appliqué à l'algorithme ARa, ou seulement le certificat codé CERT0 est appliqué à l'algorithme ARa.

Le numéro de série initial NS et le certificat codé CERT0 produit à l'étape P1a sont concaténés pour former ensemble un premier code COD1a et sont appliqués avec l'unité de redondance UR1a, en tant que données, à un algorithme de mélange MGa à l'étape P3a. L'algorithme MGa peut être de l'un des types définis pour les algorithmes M et MG. Cependant, tout autre ordre dans la concaténation des variables NS, CERT0 et UR1a peut être sélectionné lors de leur application à l'algorithme MGa. L'exécution de l'algorithme MGa produit un deuxième code COD2a qui constitue le code d'identification de la carte pré-payée virtuelle et qui est gravé ou mémorisé dans la carte selon le type de celle-ci. L'algorithme de mélange M est ainsi supprimé dans la figure 5 comparativement à la figure 1.

Selon un exemple de réalisation, le numéro de série est une suite de 23 symboles alphanumériques en code binaire, le certificat codé CERT0 est une suite de 22 symboles en code binaire, et le deuxième code COD2 généré par l'algorithme montré à la figure 5 est une suite de 9 symboles en code binaire. L'algorithme de redondance ARa ou AR est un algorithme de détection d'erreur tel que si dans un groupe de 3 symboles consécutifs dans les données appliquées telles que le numéro de série NS et/ou le certificat codé CERT0, ou bien telles que le premier code COD1, il y a une, deux ou trois erreurs, ces erreurs sont systématiquement détectées au cours de la vérification du code saisi COD2a ou COD2. L'unité de redondance UR1a, ou UR1, est composée de deux symboles alphanumériques. L'algorithme de mélange MGa, ou MG, est une simple concaténation, l'unité de redondance UR1a étant accolée à la fin de la concaténation des paramètres NS et CERT0 pour former le code COD2a selon la figure 5, ou l'unité de redondance UR1 étant accolée à la fin du premier code COD1 pour former le code COD2 selon la figure 3.

En référence maintenant à la figure 6, après la saisie du deuxième code COD2a, analogue à la saisie du code 2, le code COD2a est par exemple transmis depuis le terminal TEa de l'utilisateur de la carte dans le serveur de service SSa dans lequel des étapes V1a à V4a sont exécutées.

A l'étape V1a, le deuxième code saisi COD2a est appliqué à un algorithme MGa⁻¹ inverse de l'algorithme de mélange MGa de manière à produire un troisième code COD3a concaténé avec une deuxième unité de redondance UR2a. Le code COD3a est segmenté en un certificat codé CERT1a qui est susceptible d'être égal au certificat codé initial CERT0 et en un numéro de série NS1a qui est susceptible d'être égal au numéro de série initial NS. Les paramètres CERT1a et NS1a concaténés sont appliqués en tant que données à l'algorithme de redondance ARa à l'étape V2a. L'unité de redondance UR2a fournie par l'algorithme MGa⁻¹ et une troisième unité de redondance UR3a produite par l'algorithme ARa sont comparées à l'étape V3a. Si les unités de redondance UR2a et UR3a ne sont pas égales, la vérification du code saisi COD2a est arrêtée, la carte est refusée et une erreur de saisie ou une tentative de fraude est signalée par le serveur SSa au terminal TEa sans que le code COD3a (CERT1a, NS1a) soit vérifié.

Par contre, si les unités de redondance UR2a et UR3a sont égales, la vérification de code est poursuivie dans le serveur SSa à l'étape V4a. Le numéro de série NS1a produit par l'algorithme MGa⁻¹ est appliqué à l'algorithme A qui fournit un deuxième certificat codé CERT2a qui est comparé au certificat codé CERT1a, d'une manière analogue à la figure 2. La carte est validée lorsque les deux certificats comparés CERT1a et CERT2a sont égaux. Le serveur de service SSa donne alors accès à un service demandé par l'utilisateur de la carte, par exemple après vérification d'un mot de passe.

## Revendications

1. Procédé pour contrôler un premier code d'identification pour carte pré-payée, **caractérisé en ce qu'**il comprend les étapes suivantes :
- lors de la fabrication de la carte, application (P2, P2a) au moins d'une partie (COD0, CERT0) du premier code (COD1, COD1a) à un algorithme de redondance (AR, ARa) pour produire une première unité de redondance (UR1, UR1a), et application (P3, P3a) du premier code et de la première unité de redondance à un algorithme de mélange (MG, MGa) produisant un deuxième code (COD2, COD2a), et
- lors de l'utilisation de la carte, après saisie du deuxième code (COD2, COD2a), application (V1, V1a) du deuxième code à un algorithme (MG⁻¹, MGa⁻¹) inverse de l'algorithme de mélange pour produire un troisième code (COD3, COD3a) et une deuxième unité de redondance (UR2, UR2a), application du troisième code à l'algorithme de redondance (AR, ARa) pour produire une troisième unité de redondance (UR3, UR3a), comparaison (V3, V3a) des deuxième et troisième unités de redondance, et vérification (V4, V4a) du troisième code (COD3, COD3a) seulement lorsque les deuxième et troisième unités de redondance sont égales.

2. Procédé conforme à la revendication 1, selon lequel la première unité de redondance (UR1, UR1a) comprend un nombre de symboles inférieur à celui de ladite partie de premier code.

3. Procédé conforme à la revendication 2, selon lequel la première unité de redondance (UR1, UR1a) comprend au plus deux symboles alphanumériques.

4. Procédé conforme à l'une quelconque des revendications 1 à 3, selon lequel ladite partie du premier code est confondue avec le premier code (COD1) .

5. Procédé conforme à la revendication 4, comprenant
initialement (P1) lors de la fabrication de la carte, une application d'un numéro de série (NS) de la carte à un algorithme prédéterminé (A) pour produire un certificat codé (CERT0) et une application du numéro de série et du certificat codé en tant que données à un deuxième algorithme de mélange (M) qui produit le premier code (COD1), et
la vérification (V4) du troisième code (COD3) consiste en une application du troisième code (COD3) à un algorithme (M⁻¹) inverse dudit deuxième algorithme de mélange pour produire un premier numéro de série (NS1) et un premier certificat codé (CERT1), une application dudit premier numéro de série à l'algorithme prédéterminé (A) qui produit un deuxième certificat codé (CERT2), et une comparaison des premier et deuxième certificats codés (CERT1, CERT2) afin de valider la carte lorsque les deux certificats comparés sont égaux.

6. Procédé conforme à l'une quelconque des revendications 1 à 3, selon lequel le premier code (COD1) est généré aléatoirement.

7. Procédé conforme à l'une quelconque des revendications 1 à 3, comprenant
initialement lors de la fabrication de la carte, une application (P1a) d'un numéro de série initial (NS) de la carte à un algorithme prédéterminé (A) pour produire un certificat codé initial (CERT0), ladite partie du premier code (COD1a) appliquée à l'algorithme de redondance (ARa) étant constituée par le numéro de série initial (NS) et/ou le certificat codé initial (CERT0), et le premier code (COD1a) étant constitué par la concaténation du numéro de série initial (NS) et du certificat codé initial (CERT0), et
la vérification du troisième code (COD3a) comprenant une segmentation de celui-ci en un premier certificat codé (CERT1a) et un premier numéro de série (NS1a), une application du premier numéro de série à l'algorithme prédéterminé (A) pour produire un deuxième certificat codé (CERT2a), et une comparaison des premier et deuxième certificats codés (CERT1a, CERT2a) afin de valider la carte lorsque les deux certificats codés comparés sont égaux.

8. Procédé conforme à 'une quelconque des revendications 1 à 7, selon lequel l'algorithme de mélange (MG, MGa) est une concaténation du premier code (COD1, COD1a) et de la première unité de redondance (UR1, UR1a), et l'algorithme (MG⁻¹, MGa⁻¹) inverse de l'algorithme de mélange est une segmentation du deuxième code saisi (COD2, COD2a) en le troisième code (COD3, COD3a) et la deuxième unité de redondance (UR2, UR2a).

9. Procédé conforme à l'une quelconque des revendications 1 à 8, selon lequel, lors de l'utilisation de la carte, le deuxième code (COD2, COD2a) est saisi dans un terminal (TE1, TEa) qui le transmet à un serveur de service (SS, SSa) dans lequel l'algorithme (MG⁻¹, MGa⁻¹) inverse de l'algorithme de mélange, l'algorithme de redondance (AR, ARa), la comparaison (V3, V3a) et la vérification (V4, V4a) du troisième code sont exécutés.

## Patentansprüche

1. Verfahren zur Kontrolle eines ersten Identifizierungscodes einer vorausbezahlten Karte, **dadurch gekennzeichnet, dass** es die folgenden Schritte umfasst:
- bei der Herstellung der Karte mindestens einen Teil (COD0, CERT0) des ersten Codes (COD1, COD1a) einem Redundanzalgorithmus (AR, ARa) zur Erzeugung einer ersten Redundanzeinheit (UR1, UR1a) zu unterwerfen (P2, P2a) und den ersten Code und die erste Redundanzeinheit einem Mischalgorithmus (MG, MGa) zu unterwerfen (P3, P3a), der einen zweiten Code (COD2, COD2a) erzeugt, und
- bei Verwendung der Karte nach Erfassung des zweiten Codes (COD2, COD2a) den zweiten Code einem zum Mischalgorithmus inversen Algorithmus (MG⁻¹, MGa⁻¹) zur Erzeugung eines dritten Codes (COD3, COD3a) und einer zweiten Redundanzeinheit (UR2, UR2a) zu unterwerfen (V1, V1a), den dritten Code einem Redundanzalgorithmus (AR, ARa) zur Erzeugung einer dritten Redundanzeinheit (UR3, UR3a) zu unterwerfen, die zweite und dritte Redundanzeinheit zu vergleichen (V3, V3a) und den dritten Code (COD3, COD3a) nur zu prüfen (V4, V4a), wenn die zweite und dritte Redundanzeinheit gleich sind.

2. Verfahren nach Patentanspruch 1, nach dem die erste Redundanzeinheit (UR1, UR1a) eine kleinere Anzahl Zeichen aufweist, als der genannte Teil des ersten Codes.

3. Verfahren nach Patentanspruch 2, nach dem die erste Redundanzeinheit (UR1, UR1a) höchstens zwei alphanumerische Zeichen umfasst.

4. Verfahren nach irgendeinem der Patentansprüche 1 bis 3, nach dem der genannte Teil des ersten Codes mit dem ersten Code (COD1) zusammenfällt.

5. Verfahren nach Patentanspruch 4, umfassend,
als Erstes (P1) bei der Herstellung der Karte eine Seriennummer (NS) der Karte einem festgelegten Algorithmus (A) zur Erzeugung eines codierten Zertifikats (CERT0) zu unterwerfen und die Seriennummer und das codierte Zertifikat einem zweiten Mischalgorithmus (M) als Daten zu unterwerfen, der den ersten Code (COD1) erzeugt, und
Prüfen (V4) des dritten Codes (COD3), darin bestehend, den dritten Code (COD3) einem zum genannten zweiten Mischalgorithmus inversen Algorithmus (M⁻¹) zur Erzeugung einer ersten Seriennummer (NS1) und eines ersten codierten Zertifikats (CERT1) zu unterwerfen, die genannte erste Seriennummer einem festgelegten Algorithmus (A), der ein zweites codiertes Zertifikat (CERT2) erzeugt, zu unterwerfen und das erste und zweite codierte Zertifikat (CERT1, CERT2) zu vergleichen, um die Karte zuzulassen, wenn die beiden verglichenen Zertifikate gleich sind.

6. Verfahren nach irgendeinem der Patentansprüche 1 bis 3, nach dem der erste Code (COD1) zufallserzeugt wird.

7. Verfahren nach irgendeinem der Patentansprüche 1 bis 3, umfassend,
als Erstes bei der Herstellung der Karte eine anfängliche Seriennummer (NS) der Karte einem festgelegten Algorithmus (A) zur Erzeugung eines codierten anfänglichen Zertifikats (CERT0) zu unterwerfen (P1a), wobei der genannte Teil des ersten Codes (COD1a), der dem Redundanzalgorithmus (ARa) unterworfen wird, aus der anfänglichen Seriennummer (NS) und/oder dem anfänglichen codierten Zertifikat (CERT0) besteht und der erste Code (COD1a) aus der Verkettung der anfänglichen Senennummer (NS) und des anfänglichen codierten Zertifikats (CERT0), und
Prüfen des dritten Codes (COD3a), darin bestehend, ihn in ein erstes codiertes Zertifikat (CERT1a) und eine erste Seriennummer (NS1a) aufzuteilen und die erste Seriennummer dem festgelegten Algorithmus (A) zur Erzeugung eines zweiten codierten Zertifikats (CERT2a) zu unterwerfen und das erste und zweite codierte Zertifikat (CERT1a, CERT2a) zu vergleichen, um die Karte zuzulassen, wenn die beiden verglichenen codierten Zertifikate gleich sind.

8. Verfahren nach irgendeinem der Patentansprüche 1 bis 7, nach dem der Mischalgorithmus (MG, MGa) eine Verkettung des ersten Codes (COD1, COD1a) und der ersten Redundanzeinheit (UR1, UR1a) ist und der zum Mischalgorithmus inverse Algorithmus (MG⁻¹, MGa⁻¹) eine Aufteilung des zweiten erfassten Codes (COD2, COD2a) in den dritten Code (COD3, COD3a) und die zweite Redundanzeinheit (UR2, UR2a).

9. Verfahren nach irgendeinem der Patentansprüche 1 bis 8, nach dem bei Verwendung der Karte der zweite Code (COD2, COD2a) in einer Endeinrichtung (TE1, TEa) erfasst/eingegeben wird, die ihn einem Dienstleistungs-Server (SS, SSa) übermittelt, in dem der zum Mischalgorithmus inverse Algorithmus (MG⁻¹, MGa⁻¹), der Redundanzalgorithmus (AR, ARa), der Vergleich (V3, V3a) und die Prüfung (V4, V4a) des dritten Codes ausgeführt werden.

## Claims

1. Process for checking a first identification code for a prepaid card, **characterised in that** it comprises the following steps:
- during manufacture of the card, applying (P2, P2a) at least part (CODO, CERT0) of the first code (COD1, COD1a) to a redundancy algorithm (AR, ARa) in order to produce a first redundancy unit (UR1, UR1a), and applying (P3, P3a) the first code and the first redundancy unit to a mixing algorithm (MG, MGa) producing a second code (COD2, COD2a), and
- during use of the card, after entry of the second code (COD2, COD2a), applying (V1, V1a) the second code to an algorithm (MG⁻¹, MGa⁻¹) which is the inverse of the mixing algorithm, to produce a third code (COD3, COD3a) and a second redundancy unit (UR2, UR2a), applying the third code to the redundancy algorithm (AR, ARa) to produce a third redundancy unit (UR3, UR3a), comparing (V3, V3a) the second and third redundancy units, and verifying (V4, V4a) the third code (COD3, COD3a) only when the second and third redundancy units are equal.

2. Process according to claim 1, wherein the first redundancy unit (UR1, UR1a) comprises a number of symbols less than that of said first code part.

3. Process according to claim 2, wherein the first redundancy unit (UR1, UR1a) comprises not more than two alphanumerical symbols.

4. Process according to any one of claims 1 to 3, according to which said first code part coincides with said first code (COD1).

5. Process according to claim 4, comprising
initially (P1) during manufacture of the card, applying a serial number (NS) of the card to a predetermined algorithm (A) in order to produce a coded certificate (CERT0) and applying the serial number and the coded certificate as data to a second mixing algorithm (M) which produces the first code (COD1), and
verification (V4) of the third code (COD3) consists of applying the third code (COD3) to an algorithm (M⁻¹) which is the inverse of said second mixing algorithm in order to produce a first serial number (NS1) and a first coded certificate (CERT1), applying said first serial number to the predetermined algorithm (A) which produces a second coded certificate (CERT2), and comparing the first and second coded certificates (CERT1, CERT2) in order to validate the card when the two certificates compared are the same.

6. Process according to any one of claims 1 to 3, wherein the first code (COD1) is randomly generated.

7. Process according to any one of claims 1 to 3, comprising
initially during manufacture of the card, applying (P1a) an initial serial number (NS) of the card to a predetermined algorithm (A) in order to produce an initial coded certificate (CERT0), said part of the first code (COD1a) applied to the redundancy algorithm (ARa) consisting of the initial serial number (NS) and/or the initial coded certificate (CERT0), and the first code (COD1a) consisting of the concatenation of the initial serial number (NS) and the initial coded certificate (CERT0), and
verification of the third code (COD3), comprising segmenting it into a first coded certificate (CERT1a) and a first serial number (NS1a), applying the first serial number to the predetermined algorithm (A) in order to produce a second coded certificate (CERT2), and comparing the first and second coded certificates (CERT1a, CERT2a) in order to validate the card when the two coded certificates compared are the same.

8. Process according to any one of claims 1 to 7, wherein the mixing algorithm (MG, MGa) is a concatenation of the first code (COD1, COD1a) and the first redundancy unit (UR1, UR1a), and the algorithm (MG⁻¹, MGa⁻¹) which is the inverse of the mixing algorithm is a segmentation of the second code entered (COD2, COD2a) into the third code (COD3, COD3a) and the second redundancy unit (UR2, UR2a).

9. Process according to any one of claims 1 to 8, wherein, during use of the card, the second code (COD2, COD2a) is entered in a terminal (TE1, TEa) which transmits it to a service server (SS, SSa) in which the algorithm (MG⁻¹, MGa⁻¹) which is the inverse of the mixing algorithm, the redundancy algorithm (AR, ARa), the comparison (V3, V3a) and the verification (V4, V4a) of the third code are executed.
